Europäisches Patentamt

European Patent Office

Office européen des brevets

(19)

(11) Numéro de publication : **0 290 301 B1**

# (12) FASCICULE DE BREVET EUROPEEN

(45) Date de publication du fascicule du brevet :
**22.01.92 Bulletin 92/04**

(21) Numéro de dépôt : **88400785.7**

(22) Date de dépôt : **31.03.88**

(51) Int. Cl.$^5$ : **G02F 1/137**

(54) Ecran à matrice active pour affichage en couleur d'images de télévision, système de commande et procédé de fabrication dudit écran.

(30) Priorité : **06.04.87 FR 8704820**

(43) Date de publication de la demande :
**09.11.88 Bulletin 88/45**

(45) Mention de la délivrance du brevet :
**22.01.92 Bulletin 92/04**

(84) Etats contractants désignés :
**CH DE GB IT LI NL**

(56) Documents cités :
**EP-A- 0 162 775**
**GB-A- 1 490 110**
**US-A- 4 560 241**
**DISPLAYS, vol. 2, no. 7, octobre 1981, pages 341-347, IPC Business Press, Guildford, Surrey, GB; F. CLERC: "Electro-optical limits of the electrically controlled birefringence effect in nematic liquid crystals"**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Clerc, Jean-Frédéric 7, rue Casimir Brenier F-38120 Saint Egreve (FR)**
Inventeur : **Deutsch, Jean-Claude 52, rue Thiers F-38000 Grenoble (FR)**

(74) Mandataire : **Mongrédien, André et al c/o BREVATOME 25, rue de Ponthieu F-75008 Paris (FR)**

## Description

La présente invention concerne un écran à matrice active pour affichage en couleur d'images de télévision ainsi qu'un système de commande et un procédé de fabrication d'un tel écran.

On connaît déjà un écran à matrice active pour affichage en couleur d'images de télévision. Cet écran, qui est utilisé par la Société SEIKO-EPSON pour la fabrication de téléviseurs de poche, comprend :

— un ensemble comportant une couche de cristal liquide comprise entre une matrice active comportant des électrodes de commande transparentes et une contre-électrode transparente munie de filtres colorés respectivement associés aux électrodes de commande, et

— deux polariseurs rectilignes décroisés, situés de part et d'autre dudit ensemble.

Cet écran utilise l'effet dit "nématique en hélice" et la couche de cristal liquide a une épaisseur constante.

Cet écran connu présente les inconvénients suivants :

— l'extinction dans l'état de repos n'est obtenue qu'au voisinage d'une longueur d'onde (optique) particulière. Il en résulte, dans l'ensemble du spectre visible, une forte transmission résiduelle, et en particulier en affichage trichrome, une coloration désagréable de l'état sombre ainsi qu'une pureté réduite des couleurs dans l'état clair.

En outre, à cause de l'effet nématique en hélice, on obtient un angle de vue réduit dans les directions nord-sud de l'écran (directions verticales de l'écran) et des niveaux de gris très dépendants de l'angle d'observation non seulement dans toutes ces directions nord-sud mais encore dans les directions est-ouest (directions horizontales de l'écran).

On connaît également un autre écran à matrice active pour affichage en couleur d'images de télévision. Cet écran, qui est utilisé par la société MATSUSHITA pour la fabrication de téléviseurs de poche, diffère du précédent par le fait que l'épaisseur de la couche de cristal liquide n'est plus constante mais adaptée aux filtres colorés en regard desquels elle se trouve : l'épaisseur la plus forte correspond aux filtres rouges, l'épaisseur la moins forte, aux filtres bleus et une épaisseur intermédiaire entre les précédentes est prévue en regard des filtres verts.

Ceci permet de réduire la transmission parasite de l'état sombre et d'augmenter la pureté des couleurs. Cependant, l'état sombre de cet autre écran connu reste coloré et les inconvénients déjà indiqués, dus à l'effet nématique en hélice subsistent.

En outre, la fabrication de cet autre écran connu est compliquée du fait qu'elle nécessite l'obtention de trois épaisseurs distinctes de cristal liquide (une épaisseur pour chaque couleur bleue, rouge, verte).

La présente invention a justement pour objet un écran à matrice active pour affichage en couleur d'images de télévision, qui, tout en remédiant cet inconvénient de complexité de fabrication, permet d'obtenir une extinction totale dans l'état de repos de l'écran, pour tout le spectre visible.

De façon précise, la présente invention a pour objet un écran à matrice active active pour affichage en couleur d'images de télévision, cet écran comprenant :

— un ensemble comportant une couche de cristal liquide d'épaisseur sensiblement constante et comprise entre une matrice active comportant des électrodes de commande transparentes et une contre-électrode transparente munie de filtres colorés, respectivement associés aux électrodes de commande, et

— deux moyens de polarisation complémentaires l'un de l'autre et situés de part et d'autre dudit ensemble,

l'écran étant caractérisé en ce qu'il utilise l'effet de biréfringence contrôlée électriquement, la couche de cristal liquide étant de type nématique et d'anisotropie optique positive, les molécules de cette couche étant sensiblement orientées suivant une direction d'homéotropie, en l'absence de tension électrique entre les électrodes et la contre-électrode, ce que le produit de l'épaisseur de la couche de cristal liquide par la différence NeCl-NoCl entre l'indice extraordinaire et l'indice ordinaire de cette couche est au plus égal à 0,6 micromètre, et en ce que les deux moyens de polarisation sont complémentaires l'un de l'autre.

La réalisation d'un écran à matrice active, utilisant l'effet de biréfringence contrôlée électriquement, pour l'affichage en couleur d'images de télévision, est originale. C'est l'utilisation de cet effet qui permet d'obtenir une extinction totale dans l'état de repos de l'écran, pour tout le spectre visible.

Dans la présente invention, est également vaincu le préjugé selon lequel l'utilisation de l'effet de biréfringence contrôlée électriquement nécessite l'utilisation d'une couche de cristal liquide qui conduit à un fort trajet optique (c'est-à-dire une valeur élevée pour le produit de l'épaisseur de la couche de cristal liquide par la différence NeCl-NoCl entre l'indice extraordinaire et l'indice ordinaire de cette couche), étant donné que dans la présente invention, ce trajet optique, au plus égal à 0,6 micromètre environ, est faible.

A ce propos, on indique que cette longueur de 0,6 micromètre environ correspond en fait à la limite supérieure (en longueur d'onde) du spectre visible.

Dans la présente invention, l'utilisation d'une couche de cristal liquide conduisant à un faible trajet optique permet une augmentation de l'angle de vue pour l'écran objet de l'invention vis-à-vis d'un écran connu qui utilise l'effet de biréfringence contrôlée électriquement et pour lequel cet angle de vue ne dépasse pas 2° (par rapport à la normale à l'écran, qui passe par le centre de celui-ci).

En outre, dans l'écran objet de la présente invention, l'épaisseur de la couche de cristal liquide est sensiblement constante, ce qui facilite la réalisation de cet écran.

Ladite matrice active peut comprendre des transistors en couches minces.

De préférence, l'écran objet de l'invention comprend en outre au moins une couche d'un milieu de compensation de la biréfringence, constitué par un milieu uniaxe d'anisotropie optique négative, ayant un axe de symétrie parallèle à la direction d'homéotropie et un axe extraordinaire parallèle à cet axe de symétrie, le produit de l'épaisseur totale de milieu dans ledit écran par la différence No-Ne entre l'indice ordinaire et l'indice extraordinaire de ce milieu étant sensiblement égal au produit de l'épaisseur de la couche de cristal liquide par la différence NeCl-NoCl entre l'indice extraordinaire et l'indice ordinaire de cette couche.

L'utilisation d'une telle couche d'un milieu de compensation de la biréfringence permet d'accroître l'angle de vue dans les directions nord-sud de l'écran et d'obtenir de bons niveaux de gris, pratiquement indépendants de l'angle d'observation, dans toutes les directions nord-sud et est-ouest, ainsi qu'un fort contraste qui peut atteindre ou dépasser 200/1.

L'écran objet de l'invention est avantageusement compatible avec tout moyen de polarisation (rectiligne, circulaire ou elliptique). On indique à ce propos que par "moyens de polarisation complémentaires l'un de l'autre", on entend par exemple deux polariseurs rectilignes croisés, ou deux polariseurs circulaires ou elliptiques complémentaires l'un de l'autre vis-à-vis d'un onde lumineuse plane incidente se propageant suivant la direction d'homéotropie, ou plus brièvement, respectivement gauche et droit vis-à-vis de cette onde.

De préférence également, le cristal liquide a en outre une anisotropie diélectrique au moins égale à – 4.

Ceci permet avantageusement de réduire le papillotement que l'on observe dans les écrans commandés par une matrice active.

Dans une réalisation améliorée de l'invention, le cristal liquide est en outre choisi de façon que le rapport de sa constante élastique de flexion à sa constante élastique d'éventail soit supérieur à 1,1.

Ceci permet une réduction encore plus importante dudit papillotement.

La présente invention concerne également un système de commande de l'écran objet de l'invention, ce système comprenant des moyens d'amplification respectivement de signaux de chrominance bleu, vert et rouge prévus pour la formation des images, système caractérisé en ce que chaque moyen d'amplification est pourvu d'un réglage de gain d'amplification, prévu pour être réglé de façon à pouvoir afficher une teinte blanche neutre sur l'écran.

De préférence, les gains relatifs aux signaux bleu, rouge et vert sont respectivement peu différents de $(VmB/Vs) – 1$, $(VmR/Vs) – 1$ et $(VmV/Vs) – 1$ où Vs représente la tension de seuil d'illumination de l'écran, et VmB, VmR et VmV représentent respectivement les tensions de saturation relatives aux couleurs bleue, rouge et verte.

La présente invention concerne enfin un procédé de fabrication d'un écran à matrice active pour affichage en couleur d'images de télévision, comprenant les étapes successives suivantes :

— on réalise un premier substrat plan et transparent comprenant, sur une face, une matrice active comportant des électrodes de commande transparentes,

— on réalise un second substrat plan et transparent comprenant, sur une face, une contre-électrode transparente munie de filtres colorés destinés à être respectivement associés aux électrodes de commande,

— ledit écran étant destiné à utiliser l'effet de biréfringence contrôlée électriquement et à contenir une couche de cristal liquide de type nématique et d'anisotropie optique positive entre lesdites faces respectives des substrats rendues parallèles, on effectue un traitement de ces faces, prévu pour que les molécules de la couche de cristal liquide, une fois celle-ci en place entre les faces rendues parallèles, soient sensiblement orientées suivant une direction perpendiculaire auxdites faces en l'absence de tension électrique entre les électrodes et la contre-électrode,

— on fixe l'un à l'autre les substrats de façon que lesdites faces soient en regard l'une de l'autre et parallèles, et en prévoyant entre ces faces un intervalle tel que le produit de la largeur de cet intervalle par la différence NeCl-NoCl entre l'indice extraordinaire et l'indice ordinaire de la couche de cristal liquide soit au plus égal à 0,6 micromètre,

— on fixe de part et d'autre des substrats deux moyens de polarisation complémentaires l'un de l'autre, la fixation d'au moins l'un de ces moyens étant obtenue

● en disposant entre ce moyen et le substrat adjacent au moins une couche d'un matériau polymère thermoplastique,

● en soumettant les deux côtés de l'assemblage des substrats et de ce moyen de polarisation à une pression uniforme,

● en effectuant un chauffage de cet assemblage maintenu dans cet état de pression jusqu'à ce que chaque couche de matériau passe de sa phase vitreuse à sa phase isotrope,

● en cessant le chauffage, et

● en supprimant la pression,

l'épaisseur de chaque couche de matériau étant choisie de façon que le produit de l'épaisseur totale de matériau par la différence No-Ne entre l'indice ordinaire et l'indice extraordinaire de ce matériau soit sensiblement égal au produit de l'épaisseur de la couche de cristal liquide par la différence NeCl-NoCl entre l'indice extraordinaire et l'indice ordinaire de cette couche, et

— on introduit cette dernière entre lesdites faces.

De préférence, afin d'améliorer encore les niveaux de gris obtenus avec l'écran objet de l'invention, ledit traitement est en outre prévu pour obtenir un pré-tilt d'au moins 1° au voisinage desdites faces.

La présente invention sera mieux comprise à la lecture de la description qui suit, d'exemples de réalisation donnés à titre purement indicatif et nullement limitatif, en référence aux dessins annexés sur lesquels :

— la figure 1 est une vue en coupe schématique et partielle d'un mode de réalisation particulier de l'écran objet de la présente invention,

— la figure 2 est un graphique mettant en évidence l'obtention, avec cet écran, de tensions de saturation relatives aux couleurs bleue, rouge et verte, différentes,

— la figure 3 est une vue schématique d'un mode de réalisation particulier du système de commande objet de l'invention, utilisé pour la commande d'un écran conforme à l'invention,

— la figure 4 représente l'évolution temporelle que l'on peut obtenir dans l'invention pour les signaux vidéo bleu, vert et rouge engendrés par le système de commande,

— la figure 5 illustre schématiquement un procédé permettant de fabriquer une couche d'un milieu uniaxe d'anisotropie optique négative, utilisable dans la présente invention, et

— la figure 6 est une vue éclatée schématique d'un écran conforme à l'invention, illustrant l'intégration de la fabrication de plusieurs couches de milieu uniaxe d'anisotropie optique négative, utilisées dans cet écran, l'étape de scellement de celui-ci.

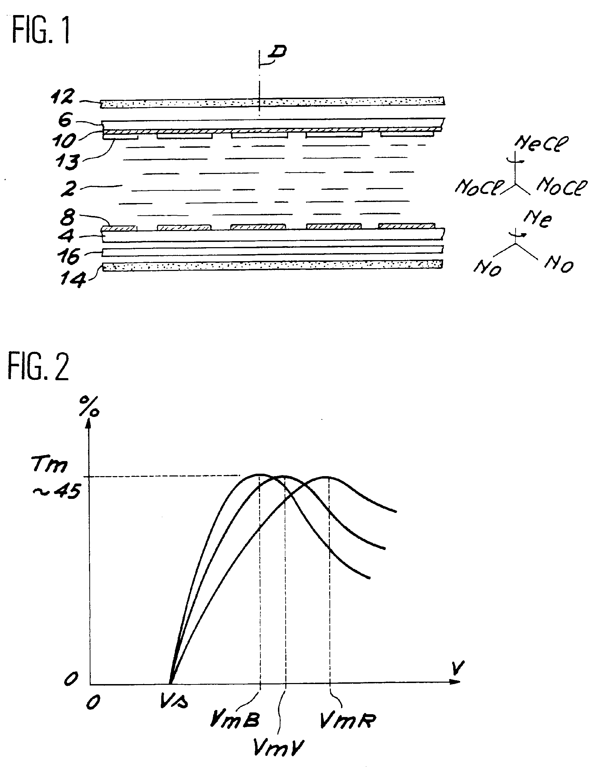

Sur la figure 1, on a représenté schématiquement un mode de réalisation particulier de l'écran à matrice active pour affichage en couleur d'images de télévision, objet de l'invention. Cet écran comprend une couche 2 de cristal liquide comprise entre une plaque inférieure 4 et une plaque supérieure 6 parallèles et transparentes, par exemple en verre. Des électrodes transparentes sont respectivement disposées sur les faces des plaques 4 et 6 qui sont directement en regard l'une de l'autre. Plus précisément, la plaque inférieure 4 porte, sur une face, une matrice active comportant des électrodes de commande transparentes 8 respectivement associées à des transistors effet de champ en couches minces non représentés. La plaque supérieure 6 porte quant à elle, sur une face, en regard des électrodes de commande, une contre-électrode transparente 10 munie de filtres 13 colorés (bleus, rouges, verts) qui sont respectivement placés en face des électrodes de commande.

La contre-électrode et les électrodes de commande sont par exemple faites de minces films d'oxyde d'indium.

Un premier et un second polariseurs rectilignes croisés 12 et 14 encadrent l'ensemble constitué par la couche 2 et les deux plaques 4 et 6, le premier polariseur 12 étant du côté de la plaque 6 et le second polariseur 14 étant du côté de la plaque 4. L'écran est destiné à être éclairé par une lumière qui tombe sur le premier polariseur 12 et observé à travers le second polariseur 14. Ces deux polariseurs se présentent sous la forme de lames qui sont parallèles aux plaques 4 et 6.

L'écran comprend en outre une lame ou feuille 16 d'un milieu de compensation, qui est disposée entre la plaque inférieure 4 et le second polariseur 14, parallèlement à celui-ci et sur laquelle des précisions seront données par la suite.

La couche de cristal liquide utilisée est une couche de cristal liquide nématique dont les molécules sont sensiblement orientées suivant une direction D perpendiculaire aux plaques 4 et 6, appelée direction d'homéotropie, en l'absence de tension électrique entre les électrodes et la contre-électrode. Cette couche de cristal liquide nématique est un milieu uniaxe d'anisotropie optique positive, l'indice extraordinaire NeCl de ce milieu étant supérieur à son indice ordinaire NoCl. L'ellipsoïde des indices de ce milieu a un axe de symétrie qui est l'axe de fort indice (NeCl dans le cas présent), et qui est parallèle aux grands axes des molécules de cristal liquide, ainsi qu'à la direction d'homéotropie, en l'absence de tension électrique entre les électrodes et la contre-électrode.

La lame 16 de compensation est un milieu uniaxe d'anisotropie optique négative, l'indice extraordinaire Ne de ce milieu étant inférieur à son indice ordinaire No. L'ellipsoïde des indices de ce milieu a un axe de symétrie qui est l'axe de faible indice (Ne dans le cas présent) et qui est parallèle à la direction d'homéotropie.

La couche de cristal liquide présente en outre un fort pré-tilt au voisinage des parois des plaques entre lesquelles elle se trouve. Une façon d'obtenir ce fort pré-tilt sera indiquée par la suite.

De plus, la couche de cristal liquide est réalisée de façon à avoir une faible "épaisseur optique" c'est-à-dire de façon que le produit de son épaisseur e sensiblement constante par la différence NeCl-NoCl soit faible, inférieur à 0,6 micromètre.

La lame de compensation optique 16 est choisie de façon à avoir une épaisseur optique sensiblement égale à celle de la couche de cristal liquide, c'est-à-dire un produit (No-Ne).ec sensiblement égal à (NeCl-NoCl).e, où ec représente l'épaisseur de la lame 16.

A titre purement indicatif et nullement limitatif, l'épaisseur e est prise égale à 4 micromètres environ, la quantité NeCl-NoCl à 0,08 environ, le cristal liquide étant du genre de celui qui est commercialisé par la société MERCK sous la référence C.C.N, et la lame de compensation 16 est obtenue par traitement d'un polymère thermoplastique commercialisé par la société Dupont de Nemours sous la marque SURLYN et a une épaisseur de l'ordre de 200 à 300 micromètres.

Le traitement de ce polymère thermoplastique sera indiqué par la suite.

La lame 16 pourrait être disposée entre la plaque 6 et la polariseur 12 au lieu d'être disposée entre la plaque 4 et le polariseur 14.

Plus généralement, il est possible de remplacer la lame 16 par une pluralité de couches de même nature, disposées les unes entre la plaque 6 et le polariseur 12 et les autres entre la plaque 4 et le polariseur 14, l'épaisseur totale de ces couches étant égale à l'épaisseur déterminée pour la lame 16.

La réponse électro-optique de l'écran représenté sur la figure 1, muni des polariseurs rectilignes croisés 12 et 14, est indiquée sur la figure 2, qui donne la transmission relative de l'écran (en pourcentage) en fonction de la tension V (exprimée en volts) appliquée entre les électrodes et la contre-électrode. On observe qu'au repos (tension nulle entre les électrodes et la contre-électrode) toutes les longueurs d'ondes (optiques) sont éteintes de façon totale. Le seuil de tension Vs correspondant à l'illumination est le même pour toutes les longueurs d'ondes. En revanche, la tension de saturation, correspondant à une transmission relative maximale Tm qui est de l'ordre de 45% de la transparence de l'écran sans polariseur, dépend de la longueur d'onde et prend ainsi des valeurs différentes pour les couleurs bleue, rouge et verte.

Sur la figure 2, les tensions de saturation respectivement associées à ces couleurs bleue, rouge et verte sont respectivement notées VmB, VmR et VmV, et VmR est supérieur à VmV, quantité elle-même supérieure à VmB.

A titre purement indicatif et nullement limitatif, en prenant une couche de cristal liquide d'environ 4 micromètres d'épaisseur, du matériau commercialisé par la société MERCK sous la référence ZLI 2659, les quantités Vs, VmB et VmR sont respectivement environ égales à 2V, 4V et 5,5V.

Le fait que les tensions de saturation pour les couleurs bleue, rouge et verte soient différentes est gênant pour l'affichage d'une teinte blanche neutre sur l'écran objet de l'invention.

Pour remédier à cet inconvénient, on utilise, pour commander cet écran, un système de commande connu dans l'état de la technique pour la commande d'écrans à matrice active et l'on adapte de façon appropriée ce système de commande. Plus précisément, on prévoit dans ce dernier un réglage du gain d'amplification pour chacun des moyens respectivement prévus pour l'amplification des signaux de chrominance bleu, rouge et vert.

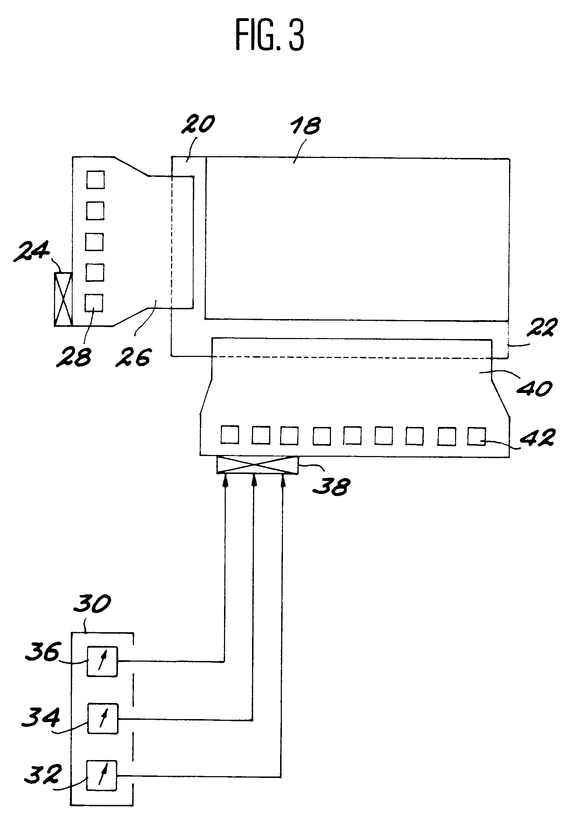

On comprendra mieux ceci à la lecture de la description de la figure 3 qui représente de façon schématique et partielle, un système de commande d'un écran 18 conforme à l'invention, par exemple du genre de celui qui est représenté sur la figure 1.

Cet écran, qui est du type à matrice active, comprend ainsi un ensemble de contacts de ligne 20 et un ensemble de contacts de colonne 22. De façon connue, le système de commande comprend des moyens 24 d'entrée des signaux de ligne munis de moyens de synchronisation et d'alimentation électrique non représentés et reliés aux contacts de ligne 20 par l'intermédiaire d'un circuit souple 26 muni de circuits intégrés 28 prévus pour la mise en forme des signaux de ligne.

De façon également connue, le système de commande comprend en outre une source de signaux vidéo 30, par exemple du type contrôleur d'écran, munie de moyens d'amplification 32, 34, 36 respectivement prévus pour amplifier les signaux de chrominance ou signaux vidéo bleu, rouge et vert préalablement démodulés.

Le système de commande comprend aussi, de façon connue, des moyens 38 d'entrée des signaux vidéo bleu, rouge et vert constituant les signaux de colonne, ces moyens 38 étant munis de moyens de synchronisation et d'alimentation électrique non représentés et étant reliés aux contacts de colonnes 22 par l'intermédiaire d'un circuit souple 40 muni de circuits intégrés 42 prévus pour la mise en forme des signaux vidéo.

Les circuits intégrés 28 et 42 sont par exemple des drivers du genre de ceux qui sont commercialisés sous les références 5280 et 5281 par la société OKI).

Conformément à la présente invention, ce système de commande de type connu est modifié de la façon suivante : on y remplace les moyens d'amplification des signaux vidéo, à gain fixe, qui s'y trouvent, par des moyens d'amplification à gain réglable. Ainsi, chacun des moyens ou étages d'amplification 32, 34 et 36 est pourvu d'un réglage de gain d'amplification (ce que l'on a symbolisé par des flèches sur les moyens 32, 34 et 36) et chacun de ces gains est réglé de façon à pouvoir afficher une teinte blanche neutre sur l'écran.

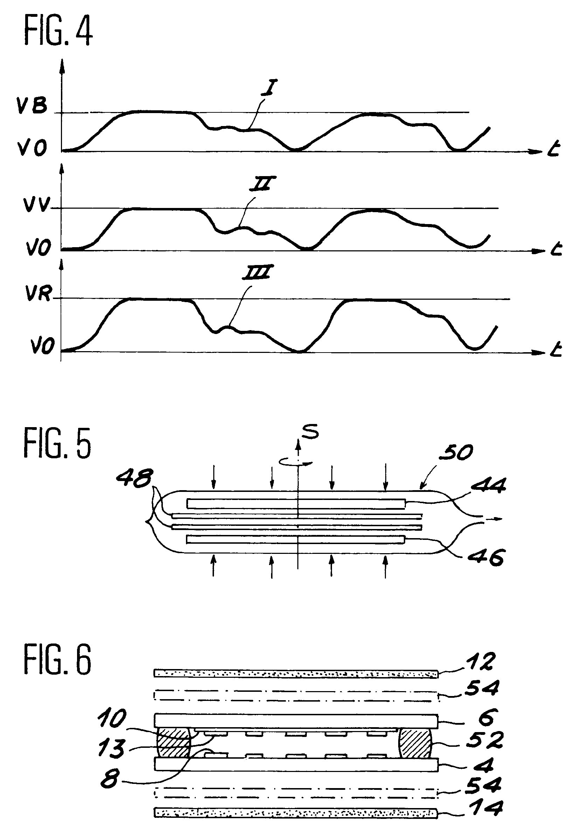

On a précisé cet ajustement séparé des gains d'amplification à l'aide de la figure 4. Celle-ci représente l'évolution en fonction du temps t des amplitudes de signaux vidéo bleu (courbe I), vert (courbe II) et rouge (courbe III), amplifiés avec les gains voulus, pour une trame paire (signaux positifs) d'une image noir et blanc avec gris, cette image étant formée sur un écran couleur du genre de l'écran 18 (figure 3). Les amplitudes des signaux vidéo bleu, vert et rouge varient respectivement d'une valeur minimale VO, commune aux trois signaux, à des valeurs maximales VB, VV, VR.

Dans le cas de cette image noir et blanc avec gris, on règle les gains GB, GV et GR correspondant respectivement aux signaux vidéo bleu, vert et rouge, ces gains valant respectivement (VB/VO) – 1, (VV/VO) – 1 et (VR/VO) – 1, de façon que ces gains soient respectivement sensiblement égaux à (VmB/Vs) – 1, (VmV/Vs) – 1 et (VmR/Vs) – 1, VR étant supérieur VV, lui-même supérieur à VB.

Dans la présente invention, on cherche également à réduire le papillotement de l'écran en fonctionnement. Ce papillotement est dû pour une grande part, à la conductivité électrique du cristal liquide et à la variation de capacité de chaque point élémentaire (électrode associée à un filtre coloré) entre l'état noir et l'état coloré de ce point.

L'utilisation de l'effet de biréfringence contrôlée électriquement permet d'employer des matériaux d'anisotropie diélectrique faiblement négative, cette anisotropie étant au moins égale – 4, ce qui est le cas du matériau commercialisé par la société MERCK sous la référence ZLI 2659, utilisable dans la présente invention. On dispose ainsi de matériaux dont la conductivité est très faible et qui conduisent à un faible écart entre la capacité des points élémentaires dans l'état coloré et la capacité de ces points dans l'état noir. On supprime ainsi les deux causes principales du papillotement. Malgré la valeur très basse de l'anisotropie diélectrique considérée, il est possible d'utiliser des tensions électriques faibles, de moins de 10 volts, pour commander les écrans conformes à l'invention, munis d'une couche de cristal liquide ayant cette anisotropie diélectrique.

On diminue encore le papillotement en choisissant un cristal liquide ayant en outre un rapport des constantes élastiques de flexion K33 et d'éventail K11 élevé, supérieur à 1,1, ce qui est encore le cas du matériau commercialisé par la société MERCK sous la référence ZLI 2659.

Sur la figure 5, on a illustré schématiquement un procédé de fabrication d'une couche d'un milieu uniaxe d'anisotropie optique négative, présentant un axe de symétrie perpendiculaire à ladite couche, l'axe de plus faible indice de cette couche étant parallèle à cet axe de symétrie. Une telle couche est utilisable dans la réalisation de l'écran représenté sur la figure 1.

Le procédé est le suivant : on dispose entre deux substrats 44 et 46 transparents, plans et rigides, une ou plusieurs feuilles 48, d'épaisseur totale appropriée, d'un matériau thermoplastique par exemple du genre de celui qui est commercialisé par la Société Dupont de Nemours sous la marque SURLYN. A température ambiante, un tel matériau est l'état vitreux mais présente une biréfringence qui dépend de son histoire antérieure. Par chauffage à une température appropriée, le matériau passe de l'état vitreux à l'état isotrope, état dans lequel il ne présente plus de biréfringence.

Les substrats 44 et 46 sont par exemple deux plaques de verre du genre des plaques 4 et 6 utilisées dans l'écran décrit en référence à la figure 1.

La ou les feuilles étant disposées entre les substrats, une pression uniforme est appliquée sur chacun desdits substrats (normalement à ceux-ci). Pour ce faire, on peut introduire l'ensemble constitué par la ou les feuilles et les substrats dans un sac en plastique 50 qui est en outre étuvable pour une raison indiquée par la suite, puis faire le vide dans ce sac et sceller thermiquement celui-ci.

Une pression uniforme égale à la pression atmosphérique est alors appliquée sur chaque substrat.

On chauffe ensuite le sac contenant l'ensemble en question, par exemple dans une étuve, jusqu'à ce que le matériau thermoplastique atteigne sa température de transition état vitreux-état isotrope (connue pour un matériau donné), après quoi l'on sort le sac de l'étuve et l'on ouvre ce sac.

Le matériau se refroidit alors et se rétracte. Cette rétractation ne peut s'effectuer que dans une seule direction perpendiculaire aux deux substrats. Il apparaît ainsi un axe de symétrie S perpendiculaire à cette direction, dans ce matériau qui, retrouvant son état vitreux, repasse à l'état biréfringent. On obtient ainsi effectivement une couche d'un milieu uniaxe d'anisotropie optique négative, ayant un axe de symétrie qui est perpendiculaire à ladite couche et porte l'axe extraordinaire du milieu.

Le procédé que l'on vient de décrire en référence à la figure 5 s'intègre directement, de façon avantageuse, un procédé de fabrication d'un écran selon la présente invention, et plus précisément l'étape de scellement de cet écran, ce scellement s'effectuant à chaud et sous pression (avant l'introduction du cristal liquide dans ledit écran).

La figure 6 illustre cette intégration : on envisage de réaliser un écran du genre de celui qui est représenté sur la figure 1, écran dans lequel la lame 16 faite d'un polymère thermoplastique est remplacée, dans le cas de l'écran représenté sur la figure 6, par deux couches 54 de même nature que la lame 16 mais dont la somme des épaisseurs est égale à celle de cette lame 16.

Plus précisément, le procédé de fabrication de l'écran en question est le suivant : on commence par réaliser la plaque 4 munie de sa matrice active et la plaque 6 munie de sa contre-électrode et des filtres colorés. On effectue ensuite un traitement en deux étapes des faces de ces plaques, faces destinées à être en regard l'une de l'autre lorsque les deux plaques sont assemblées.

La première étape est prévue pour obtenir (de façon connue) l'alignement des molécules du cristal liquide (destiné se trouver ultérieurement entre les deux substrats) suivant la direction d'homéotropie perpendiculaire aux plaques.

La seconde étape est prévue pour obtenir un fort pré-tilt du cristal liquide au voisinage des plaques.

A cet effet, on peut utiliser une technique décrite dans la demande de brevet français n°8417794 du 22 novembre 1984 (FR-A-2573548). Ainsi peut-on, pour obtenir un fort pré-tilt, au moins égal à 1°, au voisinage des faces des plaques 4 et 6, faces destinées à être en regard l'une de l'autre lorsque l'écran est assemblé, déposer par pulvérisation radiofréquence sous une tension de 1 kilovolt, dans un appareil de dépôt approprié, en y faisant défiler chacune des plaques, par exemple une couche de 100 nanomètres de silice puis réaliser une adsorption en surface de polysilanes à longue chaîne par exemple du genre du matériau qui est commercialisé par la société PETRARCH sous la référence ODS-E.

Ceci étant fait, les deux plaques sont rendues solidaires l'une de l'autre grâce à des moyens de scellement 52, un intervalle approprié étant réalisé (de façon connue) entre ces deux plaques en vue d'une introduction ultérieure entre elles de la couche de cristal liquide.

On dispose alors entre chacun des polariseurs et la plaque adjacente une épaisseur appropriée de feuilles de polymère thermoplastique destinées à la formation des couches 54.

On fait alors jouer à la plaque 4 et au polariseur 14 ainsi qu'à la plaque 6 et au polariseur 12 le rôle des substrats 44 et 46 mentionnés dans la description de la figure 5.

Plus précisément, l'ensemble constitué par les plaques 4 et 6 rendues solidaires l'une de l'autre, les polariseurs 12 et 14 et les feuilles de polymère thermoplastique destinées à la formation des couches 54, feuilles placées entre les polariseurs et les plaques correspondantes, est introduit dans un sac en plastique étuvable, le vide est fait dans ce sac et celui-ci est introduit dans une étuve. Après atteinte par le matériau thermoplastique de sa température de transition, le sac est sorti de l'étuve et ouvert. Comme précédemment, lors du refroidissement qui s'ensuit, l'ensemble des feuilles collées par étuvage les unes aux autres, devient une couche 54 d'un milieu uniaxe d'anisotropie optique négative, ayant un axe de symétrie perpendiculaire à ladite couche et portant l'axe extraordinaire du milieu.

En outre, du fait du chauffage et de la pression, la couche ainsi obtenue permet de coller l'un à l'autre la plaque 4 et le polariseur 14 ainsi que la plaque 6 et le polariseur 12 (ces polariseurs étant faits d'un matériau approprié à ce collage).

A titre purement indicatif et nullement limitatif, pour un matériau du type SURLYN, la pression uniforme appliquée est de l'ordre de $10^5$ Pa à $2.10^5$ Pa et le chauffage est effectué à une température au moins égale à 100°C, la température de transition de ce matériau étant de l'ordre de 90°C.

On obtient ainsi l'écran assemblé dans lequel on introduit ensuite la couche de cristal liquide entre les substrats 4 et 6.

## Revendications

1. Ecran à matrice active pour affichage en couleur d'images de télévision, cet écran comprenant :
— un ensemble comportant une couche de cristal liquide (2) d'épaisseur sensiblement constante et comprise entre une matrice active comportant des électrodes de commande transparentes (8) et une contre-électrode transparente (10) munie de filtres colorés (13), respectivement associés aux électrodes de commande, et
— deux moyens de polarisation (12, 14) complémentaires l'un de l'autre, situés de part et d'autre dudit ensemble,
l'écran étant caractérisé en ce qu'il utilise l'effet de biréfringence contrôlée électriquement, la couche de cristal liquide (2) étant de type nématique et d'anisotropie optique positive, les molécules de cette couche étant sensiblement orientées suivant une direction d'homéotropie (D), en l'absence de tension électrique entre les électrodes et la contre-électrode, et en ce que le produit de l'épaisseur de la couche de cristal liquide par la différence NeCl-NoCl entre l'indice extraordinaire et l'indice ordinaire de cette couche est au plus égal à 0,6 micromètre.

2. Ecran selon la revendication 1, caractérisé en ce qu'il comprend en outre au moins une couche (16, 54) d'un milieu de compensation de la biréfringence, constitué par un milieu uniaxe d'anisotropie optique négative, ayant un axe de symétrie parallèle la direction d'homéotropie et un axe extraordinaire parallèle à cet axe de symétrie, le produit de l'épaisseur totale de milieu dans ledit écran par la différence No-Ne entre l'indice ordinaire et l'indice extraordinaire de ce milieu étant sensiblement égal au produit de l'épaisseur de la couche de cristal liquide (2) par la différence NeCl-NoCl entre l'indice extraordinaire et l'indice ordinaire de cette couche.

3. Ecran selon l'une quelconque des revendications 1 et 2, caractérisé en ce que le cristal liquide a en outre une anisotropie diélectrique au moins égale à − 4.

4. Ecran selon la revendication 3, caractérisé en ce que le cristal liquide est en outre choisi de façon que le rapport de sa constante élastique de flexion à sa constante élastique d'éventail soit supérieur à 1,1.

5. Système de commande de l'écran selon l'une quelconque des revendications 1 à 4, ce système comprenant des moyens d'amplification (32, 34, 36) respectivement de signaux de chrominance bleu, vert et rouge prévus pour la formation des images, système caractérisé en ce que chaque moyen d'amplification est pourvu d'un réglage de gain d'amplification, prévu pour être réglé de façon à pouvoir afficher une teinte blanche neutre sur l'écran.

6. Système selon la revendication 5, caractérisé en ce que les gains relatifs aux signaux bleu, rouge et vert sont respectivement peu différents de (VmB/Vs) − 1, (VmR/Vs) − 1 et (VmV/Vs) − 1 où Vs représente la tension de seuil d'illumination de l'écran, et VmB, VmR et VmV représentent respectivement les tensions de saturation relatives aux couleurs bleue, rouge et verte.

7. Procédé de fabrication d'un écran à matrice active pour affichage en couleur d'images de télévision, comprenant les étapes successives suivantes :

— on réalise un premier substrat plan et transparent (4) comprenant, sur une face, une matrice active comportant des électrodes de commande transparentes (8),

— on réalise un second substrat plan et transparent (6) comprenant, sur une face, une contre-électrode transparente (10) munie de filtres colorés (13) destinés à être respectivement associés aux électrodes de commande,

— ledit écran étant destiné à utiliser l'effet de biréfringence contrôlée électriquement et à contenir une couche de cristal liquide (2) de type nématique et d'anisotropie optique positive entre lesdites faces respectives des substrats, rendues parallèles, on effectue un traitement de ces faces, prévu pour que les molécules de la couche de cristal liquide, une fois celle-ci en place entre les faces rendues parallèles, soient sensiblement orientées suivant une direction (D) perpendiculaire auxdites faces en l'absence de tension électrique entre les électrodes (8) et la contre-électrode (10),

— on fixe l'un à l'autre les substrats (4, 6) de façon que lesdites faces soient en regard l'une de l'autre et parallèles, et en prévoyant entre ces faces un intervalle tel que le produit de la largeur de cet intervalle par la différence NeCl-NoCl entre l'indice extraordinaire et l'indice ordinaire de la couche de cristal liquide (2) soit au plus égal à 0,6 micromètre,

— on fixe de part et d'autre des substrats (4, 6) deux moyens de polarisation (12, 14) complémentaires l'un de l'autre, la fixation d'au moins l'un de ces moyens étant obtenue

●en disposant entre ce moyen et le substrat adjacent au moins une couche (16, 54) d'un matériau polymère thermoplastique,

●en soumettant les deux côtés de l'assemblage des substrats et de ce moyen de polarisation à une pression uniforme,

●en effectuant un chauffage de cet assemblage maintenu dans cet état de pression jusqu'à ce que chaque couche de matériau passe de sa phase vitreuse à sa phase isotrope,

●en cessant le chauffage, et

●en supprimant la pression,

l'épaisseur de chaque couche de matériau étant choisie de façon que le produit de l'épaisseur totale de matériau par la différence No-Ne entre l'indice ordinaire et l'indice extraordinaire de ce matériau soit sensiblement égal au produit de l'épaisseur de la couche de cristal liquide (2) par la différence NeCl-NoCl entre l'indice extraordinaire et l'indice ordinaire de cette couche, et

— on introduit cette dernière entre lesdites faces.

8. Procédé selon la revendication 7, caractérisé en ce que le traitement est en outre prévu pour obtenir un pré-tilt d'au moins 1° au voisinage desdites faces.

## Claims

1. Active matrix screen for the colour display of television pictures, said screen comprising an assembly having a liquid crystal layer (2) of a substantially constant thickness and comprised between an active matrix having transparent control electrodes (8) and a transparent counterelectrode (10) provided with coloured filters (13), respectively associated with the control electrodes and two reciprocally complimentary polarizing means (12, 14) on either side of said assembly, said screen being characterized in that it utilizes the electrically controlled birefringence effect, the liquid crystal layer (2) being of the nematic type and having a positive optical anisotropy, the molecules of said layer being essentially oriented in accordance with a homeotropy direction (D), in the absence of an electrical voltage between the electrodes and the counterelectrode and in that the product of the thickness of the liquid crystal layer by the NeCl-NoCl difference between the extraordinary index and the ordinary index of said layer is at the most equal to 0.6 micrometer and in that the two polarizing means are complimentary of one another.

2. Screen according to claim 1, characterized in that it also comprises at least one layer (16, 54) of a birefringence compensating medium constituted by a uniaxial medium of negative optical anisotropy having an axis of symmetry parallel to the homeotropy direction and an extraordinary axis parallel to said axis of symmetry, the product of the total thickness of the medium in said screen by the difference No-Ne between the ordinary index and the extraordinary index of said medium being substantially equal to the product of the thickness of the liquid crystal layer (2) by the difference NeCl-NoCl between the extraordinary index and the ordinary index of said layer.

3. Screen according to either of the claims 1 and 2, characterized in that the liquid crystal also has a dielectric anisotropy at least equal to – 4.

4. Screen according to claim 3, characterized in that the liquid crystal is also chosen in such a way that the ratio of its elastic flexion constant to its elastic fan constant exceeds 1.1.

5. System for the control of the screen according to any one of the claims 1 to 4, said system incorporating amplification means (32, 34, 36) respectively of the blue, green and red chrominance signals provided for the formation of pictures, said system being characterized in that each amplification means is provided with an amplification gain regulation or control, which is to be regulated so as to be able to display a neutral white shade on the screen.

6. System according to claim 5, characterized in that the gains relative to the blue, red and green signals are respectively only slightly different from $(VmB/Vs) – 1$, $(VmR/Vs) – 1$ and $(VmV/Vs) – 1$ in which Vs represent the threshold illumination voltage of the screen and VmB, VmR and VmV respectively represent the saturation voltages relative the blue, red and green.

7. Process for the manufacture of an active matrix screen for the colour display of television pictures, comprising the following successive stages :

a first planar, transparent substrate (4) is produced having on one face an active matrix with the transparent control electrodes (8) ;

a second planar, transparent substrate (6) is produced having on one face a transparent counterelectrode (10) provided with coloured filters (13) for respective association with the control electrodes ;

said screen being intended for utilizing the electrically controlled birefringence effect and for containing a nematic liquid crystal layer (2) with positive optical anisotropy between said respective faces of said substrate rendered parallel, a treatment of one of the faces taking place, so that the molecules of the liquid crystal layer, once the latter has been placed between the parallel faces, are substantially oriented in a direction (D) perpendicular to said faces in the absence of a voltage between the electrodes (8) and the counterelectrode (10) ;

the substrates (4, 6) are fixed to one another, so that said faces face one another and are parallel and by providing between said faces a gap such that the product of the width of said gap by the difference NeCl-NoCl between the extraordinary index and the ordinary index of the liquid crystal layer (2) is at the most equal to 0.6 micrometer ; one either side of the substrates (4, 6) are fixed two polarizing means (12, 14) which are complimentary of one another, the fixing of at least one of these means being obtained

by disposing between said means and the adjacent substrate at least one layer (16, 54) of a thermoplastic polymer material,

by subjecting the two sides of the assembly of the substrate and said polarizing means to a uniform pressure,

by effecting a heating of said assembly maintained in the pressure state until each material layer passes from its vitreous phase into its isotropic phase,

by stopping the heating and eliminating the pressure,

the thickness of each material layer being chosen in such a way that the product of the total material thickness by the difference No-Ne between the ordinary index and the extraordinary index of said material is substantially equal to the product of the thickness of the liquid crystal layer (2) by the difference NeCl-NoCl between the extraordinary index and the ordinary index of said layer and the latter is introduced between said faces.

8. Process according to claim 7, characterized in that the treatment is also provided for obtaining a pre-tilt of at least 1° in the vicinity of said faces.

## Patentansprüche

1. Aktive Matrixanzeige zum farbigen Anzeigen von Fernsehbildern, wobei diese Anzeige umfaßt :

— eine Anordnung mit einer Flüssigkristallschicht (2) einer im wesentlichen konstanten Dicke, die zwischen einer aktiven Matrix mit transparenten Steuerelektroden (8) und einer transparenten Gegenelektrode (10), die mit Farbfiltern (13) versehen ist, die jeweils mit den Steuerelektroden verbunden sind, angeordnet ist, und

— zwei Polarisationsvorrichtungen (12, 14), die zueinander komplementär sind und auf der einen und der anderen Seite der Anordnung angeordnet sind,

wobei die Anzeige dadurch gekennzeichnet ist, daß sie den elektrisch gesteuerten Doppelbrechungseffekt verwendet, wobei die Flüssigkristallschicht (2) von nematischen Typ mit einer optisch positiven Anisotropie ist, wobei die Moleküle dieser Schicht bei Abwesenheit einer elektrischen Spannung zwischen den Elektroden und der Gegenelektrode im wesentlichen entlang einer Homeotropierichtung (D) ausgerichtet sind, und daß das Produkt der Dicke der Flüssigkristallschicht mit der Differenz NeCl-NoCl zwischen dem außerordentlichen und dem ordentlichen Index dieser Schicht höchstens gleich 0,6 Mikrometer ist.

2. Anzeige nach Anspruch 1, dadurch gekennzeichnet, daß sie außerdem wenigstens eine Schicht (16, 54) aus einem Kompensationsmilieu für die Doppelbrechung umfaßt, das aus einem uniaxialen Milieu mit optisch negativer Anisotropie besteht, das eine Symmetrieachse, die parallel zur Homeotropierichtung ist, und eine außerordentliche Achse parallel zu dieser Symmetrieachse besitzt, wobei das Produkt aus der Gesamtdicke des Milieus in der Anzeige mit der Differenz No-Ne zwischen dem ordentlichen und dem außerordentlichen Index dieses Milieus im wesentlichen gleich dem Produkt der Dicke der Flüssigkristallschicht mit der Differenz NeCl-NoCl zwischen dem außerordentlichen und dem ordentlichen Index dieser Schicht ist.

3. Anzeige nach einem der Ansprüche 1 und 2, dadurch gekennzeichnet, daß der Flüssigkristall außerdem eine dielektrische Anisotropie von wenigstens gleich – 4 besitzt.

4. Anzeige nach Anspruch 3, dadurch gekennzeichnet, daß der Flüssigkristall außerdem so ausgewählt wird, daß das Verhältnis seiner elastischen Biegekonstanten zu seiner elastischen Spannungskonstanten größer als 1,1 ist.

5. System zu Steuern der Anzeige nach einem der Ansprüche 1 bis 4, wobei dieses System Verstärkungsvorrichtungen jeweils für blaue, grüne und rote Chrominanzsignale besitzt, die zum Erzeugen von Bildern vorgesehen sind, wobei das System dadurch gekennzeichnet ist, daß jede Verstärkervorrichtung mit einer Regelung für den Verstärkungsfaktor vorgesehen ist, der so geregelt werden können soll, daß man einen neutralen, weißen Farbton auf der Anzeige anzeigen kann.

6. System nach Anspruch 5, dadurch gekennzeichnet, daß die jeweiligen Verstärkungen für die blauen, roten und grünen Signale sich jeweils wenig von (VmB/Vs) – 1, (VmR/Vs) – 1 und (VmV/Vs) – 1 unterscheiden, wobei Vs die Schwellspannung zum Beleuchten der Anzeige angibt und VmB, VmR und VmV jeweils die Sättigungsspannugen für die Farben blau, rot und grün darstellen.

7. Verfahren zum Herstellen einer aktiven Matrixanzeige zur farbigen Anzeige von Fernsehbildern mit folgenden, sukzessiven Verfahrensschritten :

— man erzeugt ein erstes, ebenes und transparentes Substrat (4) mit, auf einer Seite, einer aktiven Matrix mit transparenten Steuerelektroden (8),

— man erzeugt ein zweites, ebenes und transparentes Substrat (6) mit, auf einer Seite, einer transparenten Gegenelektrode (10), die mit Farbfiltern (13) versehen ist, die dazu bestimmt sind, jeweils mit den Steuerelektroden verbunden zu werden,

— man führt, wobei die Anzeige dazu bestimmt ist, den elektrisch gesteuerten Doppelbrechungseffekt zu verwenden und eine Schicht aus Flüssigkristall (2) des nematischen Typs mit einer optisch positiven Anisotropie zwischen den jeweiligen Seiten der Substrate zu halten, die parallel eingestellt werden, eine Bahandlung dieser Seiten durch, die vorgesehen ist, damit die Moleküle der Flüssigkristallschicht, sobald diese zwischen den parallel eingestellten Seiten angeordnet ist, in Abwesenheit einer elektrischen Spannung zwischen den Elektroden (8) und der Gegenelektrode (10) im wesentlichen entlang einer Richtung (D) senkrecht zu den Flächen ausgerichtet sind,

— man befestigt die Substrate (4, 6) so miteinander, daß diese Flächen einander gegenüber liegen und zueinander parallel sind und wobei man zwischen diesen Flächen einen solchen Zwischenraum vorsieht, daß das Produkt der Dicke dieses Zwischenraums mit der Differenz NeCl-NoCl zwischen dem außerordentlichen und dem ordentlichen Index der Flüssigkristallschicht (2) höchstens gleich 0,6 Mikrometer ist,

— man befestigt auf der einen und der anderen Seite der Substrate (4, 6) zwei zueinander komplementäre Polyrisationsvorrichtungen (12, 14), wobei die Befestigung wenigstens einer dieser beiden Vorrichtungen dadurch erhalten wird, daß

• man zwischen dieser Vorrichtung und dem benachbarten Substrat wenigstens eine Schicht (16, 54) eines thermoplastichen Polymermaterials anordnet,

• man die beiden Seiten der Anordnung der Substrate und dieser Polarisationsvorrichtung einem gleichmäßigen Druck aussetzt,

• man eine Erwärmung dieser unter diesem Druckzustand gehaltenen Anordnung durchführt, bis jede Materialschicht von seiner Glasphase in seine isotrope Phase übergeht,

• man die Erwärmung beendet, und

• den Druck aufhebt,

wobei die Dicke jeder Materialschicht so ausgewählt wird, daß das Produkt aus der Gesamtdicke des Materials in der Anzeige mit der Differenz No-Ne zwischen dem ordentlichen und dem außerordentlichen Index dieses Materials im wesentlichen gleich dem Produkt der Dicke der Flüssigkristallschicht (2) mit der Differenz NeCl-NoCl zwischen dem außerordentlichen und dem ordentlichen Index dieser Schicht ist, und

— man führt letztere zwischen die beiden Seiten ein.

8. Verfahren nach Anspruch 7, dadurch gekennzeichnet, daß die Behandlung desweiteren dazu vorgesehen ist, eine voreingestellte Kippung von wenigstens 1° in der Nähe der Seiten zu erhalten.

FIG. 1

FIG. 2

# FIG. 3

FIG. 4

FIG. 5

FIG. 6